Europäisches Patentamt

European Patent Office

Office européen des brevets

(11) Veröffentlichungsnummer: **0 108 186**
**B1**

(12) **EUROPÄISCHE PATENTSCHRIFT**

(45) Veröffentlichungstag der Patentschrift:
27.08.86

(21) Anmeldenummer: **83102448.4**

(22) Anmeldetag: **12.03.83**

(51) Int. Cl.⁴: **F 16 J 15/32**

(54) **Wellendichtring.**

(30) Priorität: **11.10.82 DE 3237638**

(43) Veröffentlichungstag der Anmeldung:
**16.05.84 Patentblatt 84/20**

(45) Bekanntmachung des Hinweises auf die Patenterteilung:
**27.08.86 Patentblatt 86/35**

(84) Benannte Vertragsstaaten:
**AT BE CH DE FR GB IT LI LU NL SE**

(56) Entgegenhaltungen:
**DE - A - 2 827 097**
**DE - U - 8 214 244**
**GB - A - 1 211 753**
**US - A - 2 267 930**

(73) Patentinhaber: **Firma Carl Freudenberg, Höhnerweg 4, D-6940 Weinheim/Bergstrasse (DE)**

(72) Erfinder: **Hölzer, Helmut, Hegelstrasse 15, D-6940 Weinheim (DE)**

(74) Vertreter: **Weissenfeld-Richters, Helga, Dr., Höhnerweg 2, D-6940 Weinheim/Bergstrasse (DE)**

## Beschreibung

Die Erfindung betrifft einen Wellendichtring, bestehend aus einem Versteifungsring, der einen nach innen weisenden, kegeligen Ansatz aufweist sowie aus einem Lippenring mit elastischen Eigenschaften, der den Ansatz U-förmig umschliesst und der dichtend auf der Welle aufliegt.

Ein Wellendichtring dieser Art ist aus US-A 2 67 930 bekannt. Der Lippenring ist fest mit dem Versteifungsring verbunden, woraus eine Beeinträchtigung seiner Beweglichkeit resultiert. Er liegt nur mit einer schmalen Dichtlippe an der Oberfläche der abgedichteten Welle an, und auf diese konzentrieren sich infolgedessen alle auftretenden Belastungen. Axiale und/oder radiale Wellenschwingungen können zu einem vorzeitigen Ausfall führen.

Der Erfindung liegt die Aufgabe zugrunde, einen solchen Wellendichtring derart weiter zu entwikkeln, dass die genannten Nachteile nicht mehr auftreten.

Diese Aufgabe wird erfindungsgemäss dadurch gelöst, dass der Lippenring aus einem Schlauchstück besteht, dessen Wandung einseitig zu einem nach aussen weisenden Flansch verdickt ist, das unter elastischer Deformierung des Flansches in Richtung des abgedichteten Mediums in den Ansatz des Versteifungsringes eingeführt ist, das durch eine Umstülpung des Schlauchstückes gegen den Ansatz in dieser Position gehalten wird und das statisch dichtend auf der Welle ruht.

Der Lippenring der vorgeschlagenen Ausführung läuft mit der Welle um. Die kritische Zone der dynamischen Abdichtung ist dadurch von der Oberfläche der abgedichteten Welle weg in den eigentlichen Wellendichtring hineinverlagert, wodurch der Hersteller des Wellendichtringes die Möglichkeit erhält, unabhängig von den Qualitätsmerkmalen der abzudichtenden Welle ein bestimmtes Abdichtungsergebnis zu gewährleisten.

Bei der vorgeschlagenen Ausführung sind im Gegensatz zu einer solchen nach der eingangs genannten Art zwei in Reihen hintereinander geschaltete Dichtflächen vorhanden, die das erwünschte Abdichtungsergebnis gemeinsam bewirken. Die äussere der beiden Abdichtflächen wird in erster Linie mit Staub und Schmutz beaufschlagt, die innere hingegen nur mit Flüssigkeit aus dem abgedichteten Raum. Eine jeweils spezielle Ausführung ist dadurch möglich. Das Abdichtungsergebnis wird sowohl auf der Aussenseite als auch auf der Innenseite begünstigt durch die betriebsbedingt auftretenden Fliehkräfte.

Eine serienmässige Aufeinanderfolge von zwei hintereinander geschalteten Dichtflächen bedingt eine Verminderung des jeweils anstehenden Druckes. Die zur Gewährleistung eines bestimmten Abdichtungsergebnisses notwendige Anpresskraft kann dadurch reduziert werden, was sich positiv auf die Gebrauchsdauer auswirkt.

Die Verlagerung der dynamischen Dichtungsfläche in den Wellendichtring hinein ermöglicht es, in Hinblick auf die Erzielung optimaler Reibungsverhältnisse für die Herstellung des Versteifungsringes und des Lippenringes speziell aneinander angepasste Materialien zu verwenden. Für den Versteifungsring kommen in erster Linie Metalle und Kunststoffe in Betracht. Erstere haben den Vorteil einer besonders guten Wärmeabführung aus dem Bereich der Dichtungszone, letztere den Vorteil einer besonders einfachen Herstellbarkeit, wenn das Profil von einer einfachen Rotationssymmetrie abweicht.

Für die Herstellung des Lippenringes kommen neben gummielastischen Werkstoffen vor allem Polyamid und PTFE in Betracht. Letzteres zeichnet sich wegen des «memory-Effektes» durch eine besonders ausgeglichene Anpresskraft an den Ansatz über lange Zeiträume aus.

Zur Verbesserung des Verschleissverhaltens können in dem verwendeten Werkstoff Füllstoffe enthalten sein, vor allem Fasern und/oder kolloidales Graphit. Auch die Wärmeabführung aus der Dichtungszone lässt sich hierdurch verbessern.

Die Profilgestaltung des Lippenringes erfordert in Abhängigkeit von dem verwendeten Werkstoff grosse Sorgfalt. Das Ausgangsprofil kann in etwa durch einen sich im wesentlichen in axialer und einen sich in radialer Richtung erstreckenden Schenkel gekennzeichnet werden. Diese müssen in sich so stabil und elastisch sein, dass eine Umstülpung gegen den Ansatz unter Vermeidung des Einreissens am Aussenumfang bzw. einer ziehharmonikaartigen Zusammenfältelung möglich ist unter Gewährleistung einer flüssigkeitsdichten Anlage an dem Ansatz. Die Einhaltung sämtlicher Bedingungen lässt sich ohne weiteres überprüfen. Die Auswahl geeigneter Profile bereitet insofern sachlich keine nennenswerten Schwierigkeiten.

Eine Ausführung, bei der der Ansatz und/oder der Lippenring sich parallel zueinander erstreckende Oberflächen aufweist, lässt sich besonders einfach herstellen. Abweichende Profilgestaltungen sind möglich, beispielsweise in Hinblick auf die Modifizierung der beiderseitigen Anpresskräfte.

Bevorzugte Ausführungen werden in den Unteransprüchen herausgestellt.

Der Gegenstand der vorliegenden Erfindung wird nachfolgend anhand der in der Anlage beigefügten Zeichnungen näher erläutert. Es zeigen:

Figur 1: Die grundsäztlich benötigten Teile für einen Wellendichtring der vorgeschlagenen Art vor und im Anschluss an die gegenseitige Verknüpfung und im eingebauten Zustand.

Figur 2: Einen Lippenring aus einem relativ zähen Werkstoff mit geringer Elastizität.

Figur 3: Einen Wellendichtring im eingebauten Zustand, bei dem der Lippenring mit Dichtlippen einerseits an einer sich in radialer Richtung erstreckenden Fläche des Einsatzes, andererseits an einer kegeligen Fläche anliegt.

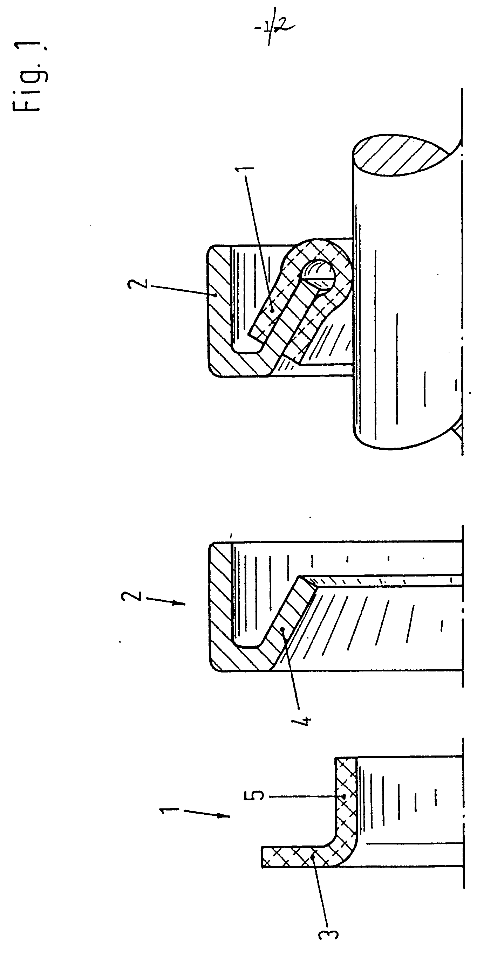

Der Lippenring in Figur 1 besteht aus einem Schlauchstück 5 aus einem gummielastischen Werkstoff mit einer Härte Shore A von 68. Dieses hat bei einer Wandstärke von 1,5 mm einen Innendurchmesser von 45 mm. Es ist am linken Ende erweitert zu einem Flansch, der einen Aussendurchmesser von 55 mm aufweist bei einer axialen Dicke von 1,5 mm. Die sich in axialer und in radialer Richtung erstreckenden Flächen gehen, wie bevorzugt in allen Fällen, abgerundet ineinander über.

Der zugehörige Versteifungsring 2 besteht aus einem tiefgezogenen Stahlblech mit einer Dicke von 1,8 mm. Der kegelige Ansatz 4 schliesst mit der Rotationsachse einen Winkel von 54° ein. Der lichte Innendurchmesser beträgt 50 mm.

Zur gegenseitigen Verankerung wird der Lippenring 1 durch eine am Innendurchmesser des Flansches 3 angreifende, axiale Druckkraft nach rechts verschoben, um ein Anlegen des Flansches an die innere Kegelfläche des Ansatzes 4 zu bewirken. Das Schlauchstück 5 überragt dann den Ansatz um ein axiales Mass. Es kann im vorspringenden Teil in radialer Richtung nach aussen aufgeweitet werden, und kippt durch die Eigenelastizität nach Überschreiten des maximalen Durchmessers selbsttätig nach links um gegen die äussere Kegelfläche des Ansatzes. Die so erzielte Einknüpfung des Versteifungsringes ist stabil. Sie bedarf zur weiteren Aufrechterhaltung keiner äusseren Kraftanwendung.

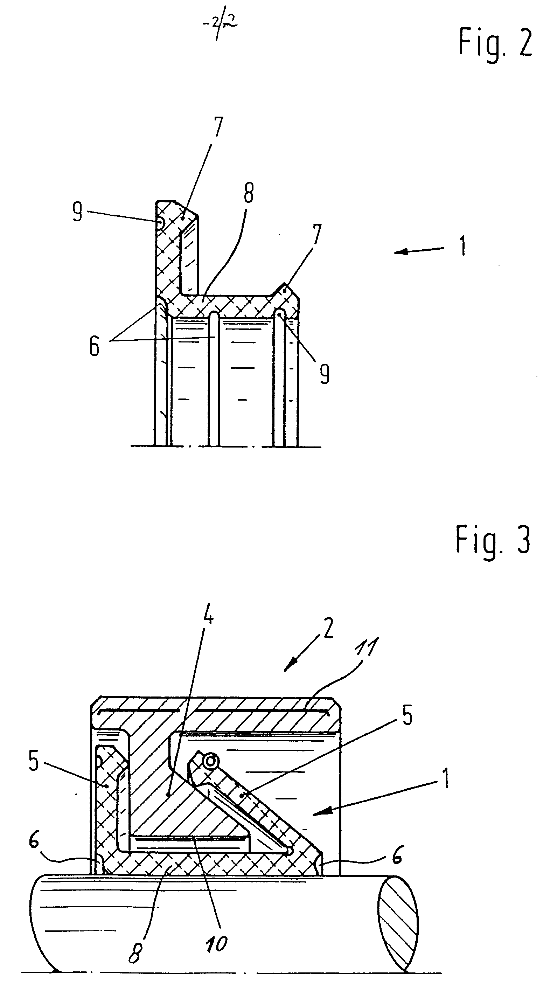

Figur 2 nimmt Bezug auf eine Ausführung, bei der der Lippenring aus PTFE besteht. Der Werkstoff hat eine weniger ausgeprägte Elastizität als gummielastische Werkstoffe, daraus hergestellte Teile haben aber wegen des «memory-Effektes» das Bestreben, im Anschluss an eine vorausgegangene kalte Umformung stets wieder die ursprüngliche Form anzunehmen. Eine entsprechende Rückformung ist bei der vorgeschlagenen Ausführung wegen Überschreitung einer Zone maximaler Verformung in einem Kipp-Punkt ausgeschlossen. Der «memory-Effekt» kann sich insofern lediglich vergleichmässigend auf die erzielte Anpressung an dem Ansatz auswirken.

Der Lippenring 1 weist durch zwei umlaufende Nuten 6 geschwächte Profilbereiche auf. Diese wirken gelenkartig und bezeichnen die Lage der Knickstelle nach dem Einbau. Der sich in axialer Richtung zwischen beiden Nuten erstreckende Bereich 8 ist relativ steif ausgebildet, um eine feste Anlage an der abzudichtenden Welle zu gewährleisten.

Der Lippenring weist zwei umlaufende Dichtlippen 7 auf, die scharfkantig durch zwei Kegelflächen begrenzt sind, und die im Anschluss an die Montage an der der Aussenluft zugewandten und an der dem abgedichteten Medium zugewandten Seite des Ansatzes 4 anliegen. Die Dichtlippen 7 können die abgedichtete Welle rotationssymmetrisch, jedoch auch mit einer gleichmässigen Wellung umschliessen.

Der Lippenring weist auf der von den Dichtlippen abgewandten Seite umlaufende, halbkreisförmig begrenzte Nuten 9 auf. Diese dienen der bedarfsweisen Aufnahme von Ringwendelfedern zur Vergrösserung der Anpressung gegen den Ansatz 4.

Figur 3 nimmt Bezug auf eine Ausführung mit einem Versteifungsring aus Kunststoff. Der kegelige Ansatz 4 weist in diesem Falle auf der von dem abgedichteten Medium abgewandten Seite eine sich in radialer Richtung erstreckende Begrenzungsfläche auf, an der der elastisch deformierte Flansch mit einer relativ geringen Vorspannung anliegt. Die Ausführung ist vor allem für starke mechanische Belastungen geeignet, beispielsweise als Radlagerabdichtung für ein Kraftfahrzeug.

Die Vorteile des vorgeschlagenen Dichtringes bestehen neben einer einfachen Herstellbarkeit vor allem in einer guten Funktionssicherheit unter schwierigen Bedingungen. Selbst bei den einfachsten Ausführungen wird die Abdichtwirkung durch den Druck des abzudichtenden Mediums und die Drehbewegung der Welle unterstützt. Diese bedarf keiner besonderen Oberflächengüte, was die Herstellungskosten senkt und Klarheit in bezug auf Gewährleistungsansprüche schafft. Die Dimensionen und die Handhabung beim Einbau können den Verhältnissen bei üblichen Radialwellendichtringen entsprechen, weshalb ein problemloser Ersatz ohne weiteres möglich ist.

**Patentansprüche**

1. Wellendichtring, bestehend aus einem Versteifungsring (2), der einen nach innen weisenden, kegeligen Ansatz (4) aufweist sowie einen Lippenring (1) mit elastischen Eigenschaften, der den Ansatz (4) U-förmig umschliesst und dichtend auf der Welle aufliegt, dadurch gekennzeichnet, dass der Lippenring (1) aus einem Schlauchstück (5) besteht, dessen Wandung einseitig zu einem nach aussen weisenden Flansch (3) verdickt ist, das unter elastischer Deformierung des Flansches (3) in Richtung des abgedichteten Mediums in den Ansatz (4) des Versteifungsringes (2) eingeführt ist, das durch eine Umstülpung des Schlauchstückes (5) gegen den Ansatz (4) in dieser Position gehalten wird und das statisch dichtend auf der Welle ruht.

2. Wellendichtring nach Anspruch 1, dadurch gekennzeichnet, dass der Ansatz (4) und/oder der Lippenring sich parallel zueinander erstreckende Oberflächen aufweist.

3. Wellendichtring nach Anspruch 1 bis 2, dadurch gekennzeichnet, dass mindestens eine Dichtfläche des Ansatzes (4) und/oder des Lippenringes (1) mit mindestens einer hydrodynamisch abdichtenden Drallrippe und/oder Nute versehen ist.

4. Wellendichtring nach Anspruch 1 bis 3, dadurch gekennzeichnet, dass die äussere Kegelfläche des Ansatzes und die Rotationsachse einen Winkel von 25 bis 50° einschliessen.

5. Wellendichtring nach Anspruch 1 bis 4, dadurch gekennzeichnet, dass das Schlauchstück (5) an dem von dem Flansch (3) abgewandten Ende verdickt ist.

6. Wellendichtring nach Anspruch 1 bis 5, dadurch gekennzeichnet, dass das Schlauchstück (5) auf der von dem Flansch (3) abgewandten Seite kegelig erweitert ist.

7. Wellendichtring nach Anspruch 6, dadurch gekennzeichnet, dass die einander gegenüberliegenden Flächen des kegelig erweiterten Schlauchstückes (5) einen Winkel von maximal 150° einschliessen.

8. Wellendichtring nach Anspruch 7, dadurch gekennzeichnet, dass der Winkel maximal 120° beträgt.

9. Wellendichtring nach Anspruch 6 bis 8, dadurch gekennzeichnet, dass der kegelig erweiterte Teil des Schlauchstückes (5) durch einen zylindrisch ausgebildeten Teil (8) von dem Flansch (3) abgesetzt ist und dass die axiale Länge des zylindrischen Teiles etwa identisch ist mit der Projektion der Stirnfläche (10) des Ansatzes (4) auf die Welle.

10. Wellendichtring nach Anspruch 1 bis 9, dadurch gekennzeichnet, dass der Flansch (3) durch einen in Richtung des Schlauchstückes in seinem Durchmesser verminderten Hohlkegel gebildet wird.

11. Wellendichtring nach Anspruch 10, dadurch gekennzeichnet, dass die einander gegenüberliegenden Flächen des Hohlkegels einen Winkel von weniger als 180° und mehr als 120° einschliessen.

## Claims

1. A shaft seal ring comprising a stiffening ring (2) which has an inwardly pointing, conical extension (4) and also a lip ring (1) which has elastic properties, encloses the extension (4) in a U-shape and sits in a sealing manner on the shaft, characterized in that the lip ring (1) comprises a tubing piece (5), the wall of which is thickened on one side into an outwardly pointing flange (3) and which, under elastic deformation of the flange (3) in the direction of the sealed medium, is inserted into the extension (4) of the stiffening ring (2), is held in this position against the extension (4) by an inversion of the tubing piece (5) and rests on the shaft in a statically sealing manner.

2. A shaft seal ring according to claim 1, characterized in that the extension (4) and/or the lip ring (1) has surfaces extending parallel to one another.

3. A shaft seal ring according to claim 1 or 2, characterized in that at least one sealing face of the extension (4) and/or the lip ring (1) is provided with at least one hydrodynamically sealing helical rib and/or groove.

4. A shaft seal ring according to any of claims 1 to 3, characterized in that the outer conical surface of the extension and the axis of rotation enclose an angle of 25° to 50°.

5. A shaft seal ring according to any of claims 1 to 4, characterized in that the tubing piece (5) is thickened at the end facing away from the flange (3).

6. A shaft seal ring according to any of claims 1 to 5, characterized in that the tubing piece (5) widens conically on the side facing away from the flange (3).

7. A shaft seal ring according to claim 6, characterized in that the oppositely located surfaces of the conically widening tubing piece (5) enclose an angle of at most 150°.

8. A shaft seal ring according to claim 7, characterized in that the angle is at most 120°.

9. A shaft seal ring according to any of claims 6 to 8, characterized in that the conically widening part of the tubing piece (5) is offset from the flange (3) by a cylindrically formed part (8), and that the axial length of the cylindrical part is approximately identical to the projection of the end face (10) of the extension (4) onto the shaft.

10. A shaft seal ring according to any of claims 1 to 9, characterized in that the flange (3) is formed by a hollow cone having a diameter reducing in the direction of the tubing piece.

11. A shaft seal ring according to claim 10, characterized in that the oppositely located hollow cone surfaces enclose an angle of less than 180° and more than 120°.

## Revendications

1. Bague étanche pour arbre constituée d'une bague raidisseuse (2), qui présente un épaulement conique (4) tourné vers l'intérieur, ainsi qu'une bague à lèvre (1) ayant des caractéristiques élastiques qui entoure l'épaulement (4) en forme de «U» et qui appuie sur l'arbre de manière étanche, caractérisée en ce que la bague à lèvre (1) est constituée d'un morceau de tuyau souple (5) dont la paroi présente, d'un côté, une surépaisseur ayant la forme d'une bride (3) tournée vers l'extérieur qui est introduite, sous déformation élastique de la bride (3) en direction du fluide à contenir, dans l'épaulement (4) de la bague raidisseuse (2), qui est maintenu dans cette position grâce à un rebroussement du morceau de tuyau (5) contre l'épaulement 4 et qui appuie sur l'abre en assurant l'étanchéité statique.

2. Bague étanche pour arbre selon la revendication 1, caractérisée en ce que l'épaulement (4) et/ou la bague à lèvre présentent des surfaces disposées parallèlement l'une à l'autre.

3. Bague étanche pour arbre selon les revendications 1 et 2, caractérisée en ce qu'au moins une surface d'étanchéité de l'épaulement (4) et/ou de la bague à lèvre (1) est pourvue d'au moins une nervure hélicoïdale et/ou d'une nervure assurant une étanchéité hydrodynamique.

4. Bague étanche pour arbre selon les revendications 1 à 3, caractérisée en ce que la surface conique extérieure de l'épaulement et l'axe de rotation forment un angle de 25 à 50°.

5. Bague étanche pour arbre selon les revendications 1 à 4, caractérisée en ce que le morceau de tuyau flexible (5) présente une surépaisseur à son extrémité opposée à la bride (3).

6. Bague étanche pour arbre selon les revendications 1 à 5, caractérisée en ce que le morceau de tuyau flexible (5) présente un élargissement conique du côté opposé à la bride (3).

7. Bague étanche pour arbre selon la revendication 6, caractérisée en ce que les surfaces opposées l'une à l'autre du morceau de tuyau (5) élargi en forme de cône forment un angle d'au maximum 150°.

8. Bague étanche pour arbre selon la revendication 7, caractérisée en ce que cet angle atteint, au maximum, 120°.

9. Bague étanche pour arbre-selon les revendications 6 à 8, caractérisée en ce que la partie élargie en forme de cône du morceau de tuyau flexible (5) est écartée de la bride (3) par une partie (8) de forme cylindrique et en ce que la longueur axiale de la partie cylindrique est à peu près identique à la projection de la surface frontale (10) de l'épaulement (4) sur l'arbre.

10. Bague étanche pour arbre selon les revendications 1 à 9, caractérisée en ce que la bride (3) est constituée par un cône creux dont le diamètre diminue en direction du morceau de tuyau flexible.

11. Bague étanche pour arbre selon la revendication 10, caractérisée en ce que les surfaces opposées l'une à l'autre du cône creux forment un angle inférieur à 180° et supérieur à 120°.

Fig. 1

Fig. 2

Fig. 3